# EUROPEAN PATENT APPLICATION

(11) **EP 4 567 712 A1**
(43) Date of publication of application: **11.06.2025**
(21) Application number: 23866780.2
(22) Date of filing: 12.01.2023
(51) Int. Cl.: G06T 3/20

(54) **VIDEO GENERATION METHOD, INFORMATION DISPLAY METHOD, AND COMPUTING DEVICE**

(30) Priority: 22.09.2022 CN 202211160552
(71) Applicant: Hangzhou Alibaba International Internet Industry Co., Ltd., Hangzhou, Zhejiang 310052 (CN)
(72) Inventor: ZHAN, Pengxin, Hangzhou, Zhejiang 311121 (CN); LIU, Kuilong, Hangzhou, Zhejiang 311121 (CN); MEI, Bo, Hangzhou, Zhejiang 311121 (CN)
(74) Representative: Marks & Clerk LLP
(86) International application number: PCT/CN2023/071967
(87) International publication number: WO 2024/060474

(57) **Abstract**

The embodiments of this application provide a video generation method, an information display method, and computing devices. The video generation method includes the following steps: acquiring at least one original image containing a target object, constructing a three-dimensional (3D) model corresponding to each of the at least one original image, transforming at least one of the 3D model into a plurality of target images using a plurality of transformation parameters, determining material information matching the target object, and generating a target video based on the plurality of target images and the material information. The technical solution provided by the embodiments of this application improves the visual effect of the video and enhances its quality.

## Description

### CROSS -REFERENCE TO RELATED APPLICATION

This application claims the priority of the Chinese patent application filed with the China National Intellectual Property Administration on September 22, 2022, with Application No. 202211160552.X and titled "Video Generation Method, Information Display Method, and Computing Device," the entirety of which is incorporated herein by reference.

### TECHNICAL FIELD

The embodiments of this application relate to the field of computer application technology, and more specifically, to a video generation method, an information display method, and a computing device.

### BACKGROUND

Compared to images, videos offer advantages such as being more vivid and expressive, with better visual effects. Consequently, videos are increasingly becoming one of the primary methods for promoting, advertising, or enhancing objects.

Traditionally, videos are generated by filming objects, which incurs relatively high production costs. In existing technologies, when images of an object are available, videos can also be generated by stitching together a plurality of object images. However, videos created through this method often suffer from poor visual effects.

### SUMMARY

The embodiments of this application provide a video generation method, an information display method, and a computing device to address the technical problem of poor visual effects in videos in existing technologies.

In a first aspect, embodiments of this application provide a video generation method, including:
acquiring at least one original image containing a target object;
constructing a three-dimensional (3D) model corresponding to each of the at least one original image;
transforming at least one of the 3D model into a plurality of target images using a plurality of transformation parameters;
determining material information matching the target object; and
generating a target video based on the plurality of target images and the material information.

In a second aspect, embodiments of this application provide a video generation method, including:
acquiring a product image of a target product;
constructing a three-dimensional (3D) model corresponding to the product image;
transforming the 3D model into a plurality of target images using a plurality of transformation parameters;
determining material information matching the target product; and
generating a target video based on the material information and the plurality of target images.

In a third aspect, embodiments of this application provide an information display method, including:
providing a display interface;
displaying image processing prompt information on the display interface;
in response to an image processing operation triggered by the image processing prompt information, sending an image processing request to a server, wherein the image processing request is configured to: cause the server to determine at least one original image containing a target object, construct a three-dimensional (3D) model corresponding to each of the at least one original image, transform at least one of the 3D model into a plurality of target images using a plurality of transformation parameters, determine material information matching the target object, and generate a target video based on the plurality of target images and the material information; and
playing the target video on the display interface.

In a fourth aspect, embodiments of this application provide a computing device, including: a processing component; and a storage component configured to store one or more computer instructions, wherein the one or more computer instructions are executable by the processing component to implement: a video generation method described in the first aspect, or the video generation method described in the second aspect, or the information display method described in the third aspect.

In a fifth aspect, embodiments of this application provide a computer storage medium storing a computer program, wherein the computer-readable storage medium, when executed by a computer, may implement the video generation method described in the first aspect, the video generation method described in the second aspect, or the information display method described in the third aspect.

In the embodiments of this application, at least one original image containing a target object is obtained, and a three-dimensional (3D) model corresponding to each of the at least one original image is constructed. Using multiple transformation parameters, the at least one 3D model is transformed into multiple target images. Material information corresponding to the target object is then determined. Based on the multiple target images and the material information, a target video is generated. By reconstructing the 3D model from the original image and adjusting the 3D model using transformation parameters to obtain multiple target images, the synthesized video exhibits dynamic effects for the target object. Combined with material information matching the target object, the final target video is generated, thereby enhancing the video's visual effects and enabling better representation of the target object.

These aspects and other aspects of this application will become clearer and more readily understood in the descriptions of the following embodiments.

### BRIEF DESCRIPTION OF THE DRAWINGS

To more clearly illustrate the technical solutions in the embodiments of this application or the prior art, the following provides a brief introduction to the drawings required in the description of the embodiments or the prior art. It is apparent that the drawings described below represent some embodiments of this application. For those skilled in the art, other drawings may be derived from these drawings without requiring creative effort.
FIG. 1 illustrates a schematic structural diagram of an embodiment of an information processing system provided in this application;
FIG. 2 illustrates a flowchart of an embodiment of the video generation method provided in this application;
FIG. 3 illustrates a flowchart of another embodiment of the video generation method provided in this application;
FIG. 4 illustrates a schematic diagram of image synthesis and display in a practical application of an embodiment of this application;
FIG. 5 illustrates a flowchart of yet another embodiment of the video generation method provided in this application;
FIG. 6 illustrates a flowchart of an embodiment of the information display method provided in this application;
FIG. 7 illustrates a schematic structural diagram of an embodiment of a video generation device provided in this application;
FIG. 8 illustrates a schematic structural diagram of an embodiment of an information display device provided in this application;
FIG. 9 illustrates a schematic structural diagram of an embodiment of a computing device provided in this application.

### DETAIL DESCRIPTION OF THE EMBODIMENTS

To enable those skilled in the art to better understand the solutions of this application, the technical solutions in the embodiments of this application will be clearly and comprehensively described below in conjunction with the accompanying drawings.

In the descriptions of the specification, claims, and the accompanying drawings of this application, certain processes include a plurality of operations presented in a specific order. However, it should be clearly understood that these operations may be executed in an order different from their appearance herein or executed in parallel. The operation numbers, such as 101, 102, etc., are merely used to distinguish different operations and do not imply any specific execution order. Furthermore, these processes may include more or fewer operations, which can be performed sequentially or in parallel. It should also be noted that terms such as "first" and "second" used herein are intended to distinguish different messages, devices, modules, etc., and do not indicate sequential order or imply that "first" and "second" refer to different types.

The technical solutions provided in the embodiments of this application can be applied to scenarios where images provided by merchants, enterprise users, individual users, or design solution providers are processed to generate videos. Since videos are more vivid and expressive compared to images, with better visual effects, they can serve purposes such as promoting, advertising, or enhancing the object. The objects mentioned in the embodiments of this application may include people, animals, or physical items. Additionally, the objects can also refer to virtual products provided by online systems for user interaction, such as purchasing or browsing. These virtual products may correspond to offline tangible items. When the online system is an e-commerce platform, the object can specifically refer to products. In such systems, images or videos are often used to describe objects, enabling better promotion of the objects to users.

To reduce the production costs associated with generating videos through filming, the common approach is to stitch together a plurality of original images containing the target object to create a video. However, videos generated using this method tend to lack vividness and naturalness, resulting in poor visual effects and an inability to effectively convey the characteristics of the target object. To enhance visual effects, produce high-quality videos, and reduce production costs, the inventors, after extensive research, proposed the technical solutions described in this application's embodiments. In these embodiments, original images can be modeled to generate a plurality of target images using various transformation parameters. These target images can represent the target object from different visual perspectives. By incorporating designed materials, the visual effects can be significantly improved, fully conveying the object's characteristics.

The technical solutions in the embodiments of this application will be described clearly and comprehensively below in conjunction with the accompanying drawings. It is evident that the described embodiments represent only a portion of the embodiments of this application, rather than all possible embodiments. Based on the embodiments disclosed in this application, all other embodiments obtained by those skilled in the art without requiring creative effort fall within the scope of protection of this application.

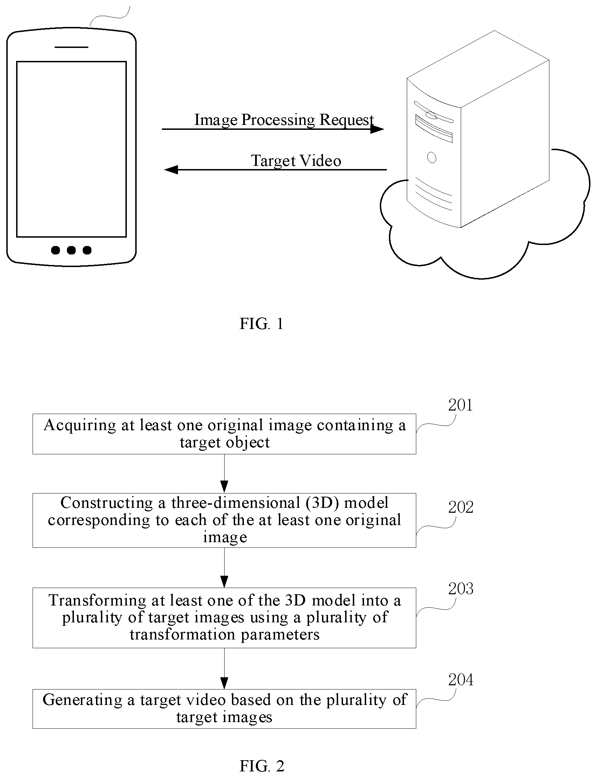

The technical solutions of the embodiments of this application can be applied to the information processing system shown in FIG. 1. This information processing system may be a system with image processing capabilities. In practical applications, the information processing system can, for example, be an online system providing interactive object processing operations, such as an e-commerce system offering product transactions, or other processing systems connected to the e-commerce system. This allows the generated videos to be published on the e-commerce platform, among other uses. The information processing system may include a client device 101 and a server 102.

The client device 101 and the server 102 are connected via a network, which provides a communication link between them. The network may include various connection types, such as wired, wireless communication links, or fiber optic cables. Alternatively, the server can establish a communication connection with the client device through a mobile network. The mobile network's standards may include any of the following: 2G (GSM), 2.5G (GPRS), 3G (WCDMA, TD-SCDMA, CDMA2000, UTMS), 4G (LTE), 4G+ (LTE+), 5G, WiMax, or others. Additionally, the client device can also establish a communication connection with the server via Bluetooth, WiFi, infrared, or similar technologies.

The client device 101 can take the form of a browser, an application (APP), a web application such as an H5 (HyperText Markup Language 5) application, a lightweight application (also referred to as a mini program, which is a lightweight application), or a cloud application. The client device 101 can be deployed on electronic devices and operates either independently or in conjunction with specific apps on the device. Examples of such electronic devices include those with display screens that support information browsing, such as personal mobile terminals like smartphones, tablets, personal computers, and more. For ease of understanding, FIG. 1 primarily represents the client device as a physical device. Additionally, various other types of applications, such as search applications or instant messaging applications, may also be configured on the electronic devices.

The server 102 may include one or more servers providing various services. It can be implemented as a distributed server cluster including a plurality of servers or as a single server. Additionally, it may function as a server in a distributed system, a server integrated with blockchain technology, a cloud server, or an intelligent cloud computing server or smart cloud host incorporating artificial intelligence technologies.

Users can interact with the server 102 via the client device 101 to send or receive messages. In the application scenarios of the embodiments of this application, this interaction can, for example, enable the acquisition of original images containing the target object. Additionally, the system can perceive corresponding user operations and send relevant processing requests to generate target videos from the original images.

For example, in the embodiments of this application, the server 102 can receive an image processing request from the client device 101. Based on the request, the server constructs a three-dimensional (3D) model for at least one original image containing the target object. Using a plurality of transformation parameters, the server transforms the 3D model into a plurality of target images, determines the material information corresponding to the target object, and generates a target video based on the plurality of target images and the material information. The server then sends the target video to the client device 101 for output by the client device.

It should be noted that, in the embodiments of this application, the video generation method is generally executed by the server 102, and the corresponding video generation apparatus is typically configured on the server 102. Similarly, the information display method is generally executed by the client device 101, and the corresponding information display apparatus is typically configured on the client device 101. However, in other embodiments of this application, the client device 101 may also have similar functionalities as the server 102, enabling it to execute the video generation method provided in this application. In further embodiments, the video generation method provided in this application can be jointly executed by the client device 101 and the server 102.

It should be understood that the number of client devices and servers shown in FIG. 1 is merely illustrative. Depending on implementation requirements, there can be any number of client devices and servers.

The implementation details of the technical solutions in the embodiments of this application are elaborated in detail below.

FIG. 2 is a flowchart of an embodiment of the video generation method provided in this application. The technical solution of this embodiment can be executed by the server. The method may include the following steps:
**S201:** acquiring at least one original image containing a target object.

As an optional implementation, the at least one original image can be obtained by receiving a user's image processing request, which includes the original image(s). Additionally, in an online system such as an e-commerce platform, the target object can be a product offered by the platform. Each product in the e-commerce system typically has a corresponding product description page, which usually includes product images along with textual descriptions. As another optional implementation, the original image can be obtained by receiving a user's image processing request, determining the index information of the target object included in the request, and then, based on the index information, identifying the original image containing the target object from the object description page corresponding to the target object. The index information can link to the object description page, enabling retrieval of the original image containing the target object from the page.

In the two optional implementations mentioned above, receiving the user's image processing request can involve sending image processing prompt information to the client device. The client device can display this prompt information on its interface, and the image processing request is sent in response to the user triggering an image processing operation based on the displayed prompt information.

The original image can either be an image obtained by photographing or capturing the target object, or an image obtained by processing such a photographed or captured image. The target object is the primary subject in the original image, serving as the main content of the image.

**S202:** constructing a three-dimensional (3D) model corresponding to each of the at least one original image.

By utilizing 3D reconstruction techniques, each of the at least one original image can be individually modeled in three dimensions, thereby obtaining a 3D model corresponding to each original image.

Optionally, constructing the 3D model corresponding to each original image can specifically involve using the pixel depth values of the original image to construct the corresponding 3D model with a 3D reconstruction model. The 3D reconstruction model can be trained based on the pixel depth values of sample images and the 3D models corresponding to those sample images.

**S203:** transforming at least one of the 3D model into a plurality of target images using a plurality of transformation parameters.

Through the 3D reconstruction of each of the at least one original image, a 3D model corresponding to each original image can be obtained to obtain at least one 3D model.

Each 3D model can be transformed using all of the plurality of transformation parameters to obtain a plurality of target images corresponding to each 3D model. Alternatively, each 3D model can be transformed using its respective transformation parameters from the plurality of transformation parameters, thereby generating a plurality of target images corresponding to each 3D model.

**S204:** generating a target video based on the plurality of target images.

In the embodiment of this application, by performing 3D reconstruction on the original images and adjusting the 3D models using transformation parameters to obtain a plurality of target images, the resulting video synthesized from these target images gives the target object a dynamic effect. This enhances the visual quality of the video, allowing for a more effective representation of the target object.

As an optional implementation, generating the target video based on the plurality of target images can involve stitching the plurality of target images together to create the target video.

The plurality of target images can be stitched together in a specific order to generate the target video. The arrangement order of the target images can be determined based on the arrangement order of the at least one original image and the arrangement order of the plurality of transformation parameters.

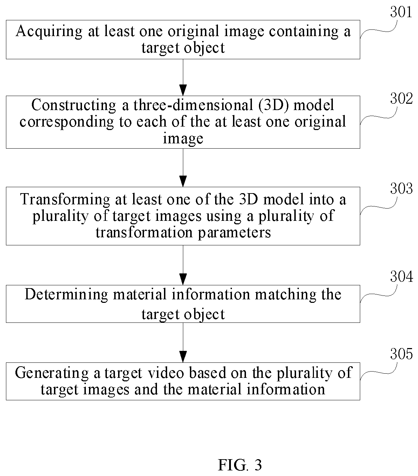

As another optional implementation, to further enhance visual effects and improve video quality, generating the target video based on the plurality of target images may include: determining material information that matches the target object; and generating the target video based on the plurality of target images and the material information. As another embodiment, as shown in the flowchart of the video generation method in FIG. 3, the method may include the following steps:
**S301:** acquiring at least one original image containing a target object.
**S302:** constructing a three-dimensional (3D) model corresponding to each of the at least one original image.
**S303:** transforming at least one of the 3D model into a plurality of target images using a plurality of transformation parameters.
**S304:** determining material information matching the target object.
**S305:** generating the target video based on the plurality of target images and the material information.

In this embodiment, by performing 3D reconstruction on the original images and adjusting the 3D models using transformation parameters to obtain a plurality of target images, the synthesized video composed of these target images gives the target object a dynamic effect. Combined with material information matching the target object, the final target video is generated, enhancing the video's visual effects and allowing for better representation of the target object.

It should be noted that the difference between this embodiment and the embodiment shown in FIG. 2 lies in that, after obtaining the plurality of target images, material information matching the target object is determined, and the target video is generated based on the plurality of target images and the material information.

Generating the target video based on the plurality of target images and the material information can involve compositing the plurality of target images with the material information. The target video is then generated based on the composited target images.

As an optional implementation, the material information may include at least one material image. Compositing at least one material image with the plurality of target images can involve determining the correspondence between at least one material image and at least one target image, and compositing each material image into its corresponding target image.

Determining the material information matching the target object can involve identifying at least one material image based on the category to which the target object belongs.

The object category may include, for example, food, apparel, personal care, and similar categories.

Identifying at least one material image based on the category to which the target object belongs can involve using a pre-established correspondence between object categories and material images. By inputting the object category, the corresponding material image can be retrieved according to this correspondence.

A single target image may correspond to at least one material image. For ease of processing, the material image and the target image may also correspond one-to-one, meaning each material image corresponds to exactly one target image. The number of material images corresponding to the object category can be determined based on the object category and the number of target images. These material images can be preconfigured as frames within a material video corresponding to the object category.

The number of material images matches the number of target images when the numbers are either identical or have a difference within a specified range. When the number of material images is identical to the number of target images, a one-to-one correspondence is established between them. This correspondence can be determined based on the arrangement order of the material images and the target images. For example, material images and target images with the same arrangement position can be considered as having a one-to-one correspondence.

When the number of material images is less than or greater than the number of target images, the following processing can be performed: if the number of material images is less than the number of target images, at least one target image can be selected from the plurality of target images based on the number of material images. For example, target images can be selected sequentially from the first image based on their arrangement order. If the number of material images is greater than the number of target images, a plurality of material images can be selected from the material images based on the number of target images. For example, material images can be selected sequentially from the first image based on their arrangement order.

It is also possible to predefine the material images corresponding to different object identifiers, allowing at least one corresponding material image to be determined based on the object identifier. Alternatively, the object features of the target object can be identified, and at least one material image meeting the matching requirements can be determined based on the degree of matching between the image features of the material image and the object features. The degree of matching between the image features and the object features can be calculated using a matching model trained in advance.

Compositing any material image with its corresponding target image can involve the following steps: determining a compositing region based on the position of the target object within the target image and the corresponding material image; adjusting the image size and compositing direction of the material image based on the determined compositing region; compositing the adjusted material image into the compositing region according to the compositing direction.

The method for compositing any material image with its corresponding target image may include one or more of the following techniques: color filtering, overlay, soft light, hard light, bright light, solid color blending, opacity adjustment, multiply, color burn, or color dodge. The compositing method corresponding to different material images can be predefined.

As another optional implementation, the material information may include textual information. Compositing the textual information with the plurality of target images can involve integrating the textual information into at least one of the target images.

The textual information can be generated based on the object-related information of the target object. The object-related information may include one or more of the following: object description information, object evaluation information, object category information, and object images. The object image can refer to the aforementioned original image or other images containing the target object. The object description information may include relevant details from the object description page, such as the object's name, price, place of origin, and similar data. The object evaluation information can refer to comments or feedback provided by users regarding the target object.

The textual information can be determined using a textual generation model based on the object-related information of the target object. This textual generation model can be trained using the object-related information of sample objects and their corresponding sample textual information.

The method for compositing the textual information into at least one of the plurality of target images can vary. For example, it may specifically involve overlaying the textual information onto the target image.

At least one of the plurality of target images, which undergoes compositing with the textual information, can be selected starting from the first image in the arrangement order of the plurality of target images. A certain number of target images are selected, and the textual information is composited into the selected target images.

As another optional implementation, the material information may include at least one material image and textual information. Based on the plurality of target images and the material information, the target video is generated. Compositing the material information with the plurality of target images can prioritize compositing at least one material image first, followed by the compositing of the textual information. Alternatively, the textual information may be prioritized for compositing with the plurality of target images. No specific limitation is imposed on this order.

Additionally, as another optional implementation, the material information may include audio data that matches the target object. Based on the plurality of target images and the material information, generating the target video may include: stitching the plurality of target images together to create a candidate video, and then merging the audio data with the candidate video to obtain the final target video.

The material information may also include at least one material image, textual information, and audio data. The at least one material image and the textual information can be composited with the plurality of target images. Then, the composited target images are stitched together to generate a candidate video, after which the audio data is merged with the candidate video to obtain the final target video.

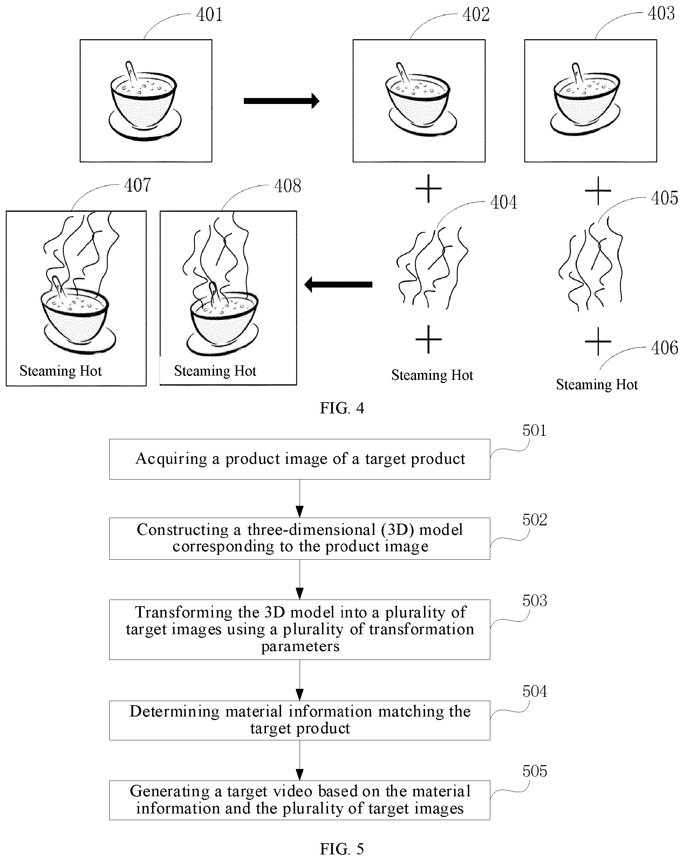

To aid in understanding, FIG. 4 illustrates a schematic diagram of compositing material images and textual information into at least one target image. In FIG. 4, after constructing the corresponding 3D model for the original image 401, the 3D model is transformed into a plurality of target images using a plurality of transformation parameters. Two target images are shown as examples: target image 402 and target image 403. The target object is a bowl of porridge, and its object category is "hot food." The corresponding material image for this category is a "steam rising" material image. Two material images are shown as examples: material image 404 and material image 405. The textual information 406 is "steaming hot," which is used as an example. Target image 402 is composited with material image 404 and the textual information "steaming hot" to obtain target image 407. Similarly, target image 403 is composited with material image 405 and the textual information "steaming hot" to obtain target image 408. The target images 407 and 408 can be stitched together in a specific order to generate the target video. The specific method of determining the order of the plurality of target images has been detailed earlier and will not be repeated here.

In some embodiments, transforming the at least one 3D model into a plurality of target images using a plurality of transformation parameters can involve determining a plurality of transformation parameters corresponding to at least one camera motion effect. The at least one 3D model is then transformed into a plurality of target images using these transformation parameters.

The plurality of transformation parameters can be used to adjust the at least one 3D model and perform projection transformations to generate a plurality of target images. Each transformation parameter may include a transformation matrix and a projection matrix. The transformation matrix may include a rotation matrix and may also include one or more of a translation matrix and a scaling matrix. The projection matrix is used to project the 3D model onto a 2D plane to obtain the target image.

Each camera motion effect can correspond to a plurality of transformation parameters. The display effect of the plurality of target images generated by the plurality of transformation parameters corresponding to each camera motion effect can express that specific camera motion effect.

The at least one camera motion effect may include, for example: translation in any direction such as forward, backward, left, right, up, or down, rotation, and the Hitchcock zoom (Dolly Zoom), among others.

Since a camera is a device that projects 3D objects into 2D images, in some embodiments, transforming the at least one 3D model into a plurality of target images using a plurality of transformation parameters can involve determining at least one virtual camera corresponding to each 3D model. Using the virtual camera corresponding to each 3D model, the at least one 3D model is projected into a plurality of target images based on the plurality of transformation parameters.

In other words, by setting up a virtual camera, the at least one 3D model can be projected into a plurality of target images using the virtual camera corresponding to each 3D model, based on the transformation parameters corresponding to each 3D model.

For example, based on the transformation parameters, by adjusting the internal and external parameters of the virtual camera, such as the camera's position, angle, focal length, and aperture, the 3D model can be projected into a plurality of target images.

Since the original image is composed of a plurality of layers, where each layer is like a film containing elements such as text or graphics, stacked in sequence to form the final image effect, the occlusion relationship between adjacent layers may change during the transformation process of the 3D model. This could potentially cause color distortion. To improve video quality and ensure better visual effects, in some embodiments, transforming the at least one 3D model into a plurality of target images using a plurality of transformation parameters may also include: determining the plurality of layers contained in the original image; identifying the boundary region where one layer overlaps with another layer between adjacent layers; defining the boundary region of the original image as the corresponding boundary region for each of the plurality of target images; filling the boundary region of any target image with the target color.

The boundary region refers to the position area where one layer overlaps with another layer, creating an occlusion on the other layer. Due to the transformation process of the 3D model, this boundary region may become exposed and no longer be occluded, so it needs to be filled with color to ensure the display effect. The boundary region corresponding to each layer in the original image becomes the boundary region of the original image. Since the layers do not change in the plurality of target images generated based on the original image, the boundary region of the original image will also correspond to the boundary region of each target image.

The boundary region can be fully filled with the target color. The target color can be a predefined color. Additionally, to improve visual effects, the target color can be determined based on the color of the layer containing the boundary region. For example, it can be the blended value of the pixel colors in the layer where the boundary region is located, or the dominant color among the pixel colors in that region. Alternatively, the target color can also be determined based on the pixel colors in the surrounding area of the boundary region. As another optional implementation, filling the boundary region with the target color in any target image can involve determining the target region within the boundary region that meets the filling requirements based on the transformation parameters corresponding to the target image. The target color is then determined based on the pixel colors of the surrounding area of the target region, and the target region is filled with the target color.

The filling requirement refers to the unobstructed area, which can be determined based on the transformation parameters corresponding to the target object.

The target color can be determined using a color filling model, based on the pixel colors in the surrounding area of the target region. The color filling model can be trained in advance using pixel colors from sample regions and their corresponding sample target colors.

The surrounding area can refer to a region within a certain distance from the target region or a region composed of several pixels around the target region.

Each boundary region in every target image can be filled with a target color. Alternatively, only the boundary regions and target images containing target regions that meet the filling requirements may be filled with the target color.

In some embodiments, generating the target video based on the plurality of target images and the material information may include: compositing the material information with the plurality of target images; and generating the target video based on the composited target images.

Generating the target video based on the composited target images can involve determining the arrangement order of the plurality of target images according to the arrangement order of at least one original image and the arrangement order of the plurality of transformation parameters. The target video is then generated by stitching the plurality of target images together in the determined order.

When the plurality of transformation parameters are determined based on at least one camera motion effect, the arrangement order of these parameters can be determined according to the arrangement order of the camera motion effect. The arrangement order of the at least one original image and the at least one camera motion effect can either be predefined or determined based on user requirements. For instance, the image processing request may include the arrangement order of the at least one original image and the arrangement order of the at least one camera motion effect.

For ease of understanding, assume there are two original images with the following arrangement order: original image A and original image B; the arrangement order of two camera motion effects is: effect A and effect B. Original image A, when processed with effect A, generates two target images, arranged by generation time as: target image A1 and target image A2. Original image A, when processed with effect B, generates two target images, arranged by generation time as: target image A3 and target image A4; original image B, when processed with effect A, generates target image B1, and when processed with effect B, generates target image B2. Thus, the final arrangement order of the plurality of target images can be: target image A1, target image A2, target image A3, target image A4, target image B1, and target image B2. Of course, this is merely an example of one possible implementation, and the application is not limited to this arrangement.

As an optional implementation, after generating the target video, the method may further include:
sending the target video to the client device for output by the client device.

In some embodiments, a download prompt can also be sent to the client device, allowing the client device to display the download prompt while outputting the target video. In response to a download operation triggered by the user based on the download prompt, the client device can save the target video to a corresponding local file.

Additionally, a publish prompt can be sent to the client device, allowing the client device to display the publish prompt while outputting the target video. In response to a publish operation triggered by the user based on the publish prompt, the client device can send a publish request to the server. The server can then update the object description page using the target video based on the publish request.

Additionally, a publish prompt can be sent to the client device, allowing the client device to display the publish prompt while playing the target video. In response to a publish operation triggered by the user based on the publish prompt, the client device can send a publish request to the server. The server can then publish the target video to an object promotion page based on the publish request. The target video and the object description page can be linked, enabling a trigger operation on the target video within the object promotion page to redirect to the object description page. This facilitates user interaction with the target object.

As another optional implementation, after generating the target video, the method may further include:
updating the object description page using the target video.

It can directly use the target video to update the object description page after the server generates the target video. Alternatively, the server can send an update prompt to the client device, and upon user confirmation of the update, the client device can send an update request. The server can then use the target video to update the object description page. Using the target video to update the object description page may involve replacing an existing video on the object description page or adding the target video to the page.

As another optional implementation, after generating the target video, the method may further include: establishing a link between the target video and the object description page; publishing the target video to an object promotion page. When a trigger operation on the target video is detected on the object promotion page, redirecting to the object details page based on the established link.

Additionally, the server can first send a publish prompt to the client device. Upon receiving a publish request, the server can then establish a link between the target video and the object description page and publish the target video to the object promotion page.

In a practical application scenario, the proposed solution can be applied in an online transaction scenario, where the target object refers to a target product offered by an online transaction system. Taking the target object as a target product as an example, the technical solution of this application is described below. As shown in FIG. 5, it illustrates a flowchart of yet another embodiment of the video generation method provided by this application. The technical solution of this embodiment can be executed by the server and may include the following steps:
**S501:** acquiring a product image of a target product.

As an optional implementation, this can involve receiving a user's image processing request and acquiring the product image included in the request.

As another optional implementation, this can involve receiving a user's image processing request, identifying the index information corresponding to the target product included in the request, and then, based on the index information, recognizing the product image containing the target product from the product description page associated with the target product.

In the two optional implementations mentioned above, receiving the user's image processing request can involve sending image processing prompt information to the client device. The client device displays the prompt information on its interface, and the image processing request is sent in response to the user triggering an image processing operation based on the displayed prompt information.

**S502:** constructing a 3D model corresponding to the product image.

Constructing the 3D model corresponding to the product image can involve using the pixel depth values of the product image to construct the corresponding 3D model with a 3D reconstruction model. This 3D reconstruction model is trained based on the pixel depth values of sample images and their corresponding 3D models.

**S503:** transforming the 3D model into a plurality of target images using a plurality of transformation parameters.

**S504:** determining material information matching the target product.

**S505:** generating the target video based on the material information and the plurality of target images.

In the embodiments of this application, by performing 3D reconstruction on the product image and adjusting the 3D model using transformation parameters to obtain a plurality of target images, the synthesized video composed of these target images gives the target object a dynamic effect. Combined with material information matching the target object, the final target video is generated, enhancing the video's visual quality and allowing for a better representation of the target object.

It should be noted that the difference between the embodiment shown in FIG. 5 and the embodiment shown in FIG. 3 lies in the fact that the target object is specifically a target product. Other identical or corresponding steps can be referred to in the embodiment described in FIG. 3 and will not be repeated here.

As an optional implementation, after generating the target video, the method may further include:
sending the target video to the client device for playback.

Additionally, a download prompt can be sent to the client device, allowing the client device to display the download prompt while playing the target video. In response to a download operation triggered by the user based on the download prompt, the client device can save the target video to a corresponding local file;
additionally, an update prompt can be sent to the client device, allowing the client device to display the update prompt while playing the target video. In response to an update operation triggered by the user based on the update prompt, the client device can send an update request to the server. The server can then use the target video to update the object description page based on the update request.

Additionally, a publish prompt can be sent to the client device, allowing the client device to display the publish prompt while playing the target video. In response to a publish operation triggered by the user based on the publish prompt, the client device can send a publish request to the server. The server can then publish the target video to a product promotion page based on the publish request. The target video and the product detail page can be linked, allowing a trigger operation on the target video within the product promotion page to redirect to the product detail page via the established link. This facilitates user actions such as purchasing the product. The product promotion page, also known as a multi-product aggregation page, is used for product introductions and promotions. High-quality videos can attract user clicks on the target video, thereby helping to improve the product purchase rate and conversion rate.

As another optional implementation, after generating the target video, the method may further include: updating the product detail page using the target video.

It can update the product detail page using the target video after the server generates the target video. Alternatively, the server can send an update prompt to the client device and update the product detail page using the target video after receiving an update request.

As another optional implementation, after generating the target video, the method may further include: establishing a link between the target video and the product detail page; publishing the target video to a product promotion page, such that when a trigger operation on the target video is detected on the product promotion page, redirecting to the product detail page based on the established link.

Additionally, the server can first send a publish prompt to the client device. Upon receiving a publish request, the server can then establish a link between the target video and the product detail page and publish the target video to the product promotion page.

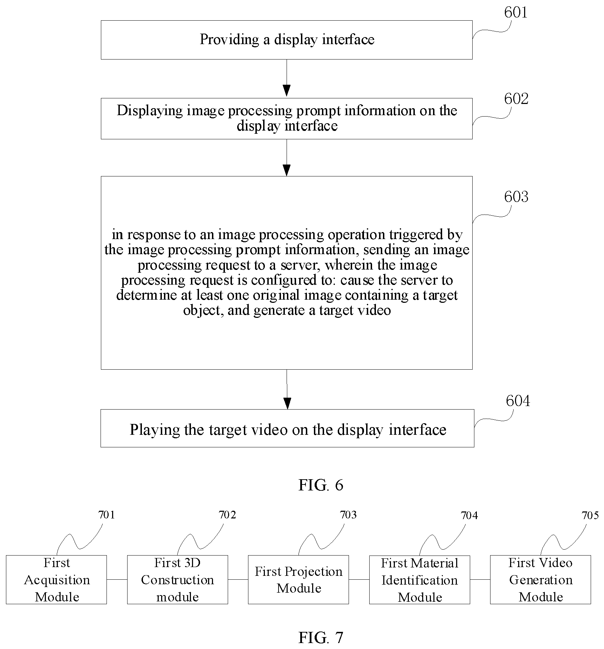

FIG. 6 illustrates a flowchart of an embodiment of the information display method provided by this application. The technical solution of this embodiment can be executed by the client device and may include the following steps:
**S601:** providing a display interface.
**S602:** displaying image processing prompt information on the display interface.
**S603:** in response to an image processing operation triggered by the image processing prompt information, send an image processing request to the server. The image processing request is used by the server to: determine at least one original image containing the target object, construct a 3D model corresponding to each of the at least one original image, transform the at least one 3D model into a plurality of target images using a plurality of transformation parameters, determine material information matching the target object, and generate the target video based on the plurality of target images and the material information.

The method by which the server, based on the image processing request, determines at least one original image containing the target object and subsequently generates the target video is detailed in the embodiment shown in FIG. 3. Identical or corresponding steps will not be repeated here.

**S604:** playing the target video on the display interface.

The target video generated by the server is sent to the client device, allowing the client device to play the video on the display interface. If the target video contains audio data, the audio can be played in combination with an audio playback component.

As an optional implementation, after playing the target video on the display interface, the method may further include: saving the target video to the corresponding local file on the client device based on a download operation triggered by the user.

The download prompt sent by the server can be received and displayed on the display interface. The download operation can then be triggered in response to the download prompt.

As another optional implementation, after playing the target video on the display interface, the method may further include:
in response to an update operation triggered by the user, sending an update request to the server. The server can then use the target video to update the object description page based on the update request.

Optionally, the update prompt sent by the server can be received and displayed on the display interface. The update operation can then be triggered in response to the update prompt.

As another optional implementation, after playing the target video on the display interface, the method may further include:
in response to a publish operation triggered by the user, sending a publish request to the server. The server can then use the target video to publish it to the object promotion page based on the publish request.

Optionally, the publish prompt sent by the server can be received and displayed on the display interface. The publish operation can then be triggered in response to the publish prompt.

The specific operations performed by the server can be found in the corresponding embodiments described earlier and will not be repeated here.

FIG. 7 illustrates a structural diagram of an embodiment of a video generation device provided by this application. The device may include:

first acquisition module 701: used for acquiring at least one original image containing the target object;
first 3D construction module 702: used for constructing a 3D model corresponding to each of the at least one original image;
first projection module 703: used for transforming the at least one 3D model into a plurality of target images using a plurality of transformation parameters;
first material identification module 704: used for determining the material information that matches the target object;
first video generation module 705: used for generating the target video based on the plurality of target images and the material information.

The first acquisition module acquires at least one original image containing the target object, which can be done by receiving a user's image processing request and acquiring the at least one original image included in the request.

As another optional implementation, this can involve receiving a user's image processing request, determining the index information corresponding to the target object included in the request, and then, based on the index information, recognizing the original image containing the target object from the object description page corresponding to the target object.

The first projection module transforms the at least one 3D model into a plurality of target images using a plurality of transformation parameters. This can be achieved by determining a plurality of transformation parameters corresponding to at least one camera motion effect and using these parameters to transform the at least one 3D model into a plurality of target images.

As another optional implementation, it can involve determining a virtual camera corresponding to at least one 3D model, and using the virtual camera, the at least one 3D model is projected into a plurality of target images based on the plurality of transformation parameters corresponding to the virtual camera.

The first video generation module generates the target video based on the plurality of target images and material information by compositing the plurality of target images with the material information. The target video is then generated based on the composited target images.

The material information may include at least one material image. Compositing at least one material image with the plurality of target images can involve determining a one-to-one correspondence between at least one material image and at least one target image, and then compositing each material image into its corresponding target image.

The one-to-one correspondence between at least one material image and at least one target image, determined by the first material identification module, can involve identifying the object category to which the target object in at least one target image belongs, and using this information to determine the at least one material image.

Compositing any material image into its corresponding target image can involve the following steps: based on the material image and its corresponding target image, determine the compositing area based on the position of the target object in the target image. Adjust the image size and compositing direction of the material image based on the compositing area. Composite the material image into the compositing area according to the compositing direction after adjustment.

The material information may also include textual information. Compositing the textual information with the plurality of target images can involve integrating the textual information into at least one of the plurality of target images.

The first material identification module determines the textual information corresponding to the target object. The textual information can be generated based on the object-related information of the target object, such as object description information, evaluation information, category information, and so on.

The first video generation module is used to generate the target video based on the plurality of target images and material information. This can involve determining the arrangement order of the plurality of target images according to the arrangement order of at least one original image and the corresponding transformation parameters of at least one 3D model. The plurality of target images are then stitched together in the determined order to generate the target video.

In some embodiments, the target video can be sent to the client device for output by the client device after generating the target video based on the plurality of target images.

The video generation device shown in FIG. 7 can be applied in an e-commerce scenario. In the e-commerce scenario, the first acquisition module can specifically acquire the product image of the target product, and the first 3D construction module can specifically construct the 3D model corresponding to the product image.

The video generation device described in FIG. 7 can execute the video generation method shown in FIG. 3. The implementation principles and technical effects have already been discussed in detail and will not be repeated here. The specific ways in which each module or unit of the information processing device in the aforementioned embodiments performs operations have been thoroughly described in the relevant embodiments of the method, and no further detailed explanation will be provided here.

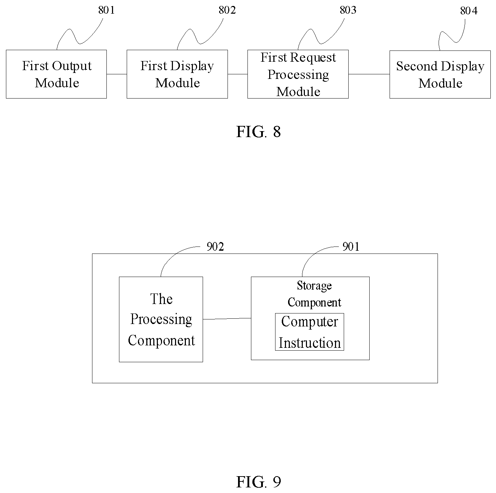

FIG. 8 illustrates a structural diagram of an embodiment of an information display device provided by this application. The device may include:
first output module 801: provides a display interface;
first display module 802: displays image processing prompt information on the display interface;
first request processing module 803: in response to an image processing operation triggered by the image processing prompt information, sends an image processing request to the server; the image processing request is used by the server to determine the original image containing the target object;
second display module 804: plays the target video on the display interface.

In a possible design, the information display device described in FIG. 8 can be implemented as the client device mentioned earlier. The information display device shown in FIG. 8 can execute the information display method shown in FIG. 6. The implementation principles and technical effects have already been discussed and will not be repeated here. The specific ways in which each module or unit of the information display device in the aforementioned embodiments performs operations have been thoroughly described in the relevant embodiments of the method, and no further detailed explanation will be provided here.

The embodiments of this application also provide a computing device, as shown in FIG. 9. The computing device may include a storage component 901 and a processing component 902.

The storage component 901 stores one or more computer instructions, and the one or more computer instructions are used by the processing component to execute the video generation methods described in the embodiments shown in FIG. 2, FIG. 3, or FIG. 5.

The device may also include other components, such as input/output interfaces, display components, communication components, and others.

In the case where the processing component in the computing device is used to implement the information display method shown in FIG. 6, the computing device may also include a display component to perform the corresponding display operations.

The input/output interface provides an interface between the processing component and the peripheral interface module. The peripheral interface module may include output devices, input devices, and others. The communication component is configured to facilitate wired or wireless communication between the computing device and other devices.

The processing component 902 may include one or more processors to execute computer instructions and complete all or part of the steps in the methods described above. Of course, the processing component can also be implemented using one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components, to execute the methods described above.

The storage component 901 is configured to store various types of data to support operations on the terminal. The storage component can be implemented using any type of volatile or non-volatile storage device, or a combination of them, such as static random-access memory (SRAM), electrically erasable programmable read-only memory (EEPROM), erasable programmable read-only memory (EPROM), programmable read-only memory (PROM), read-only memory (ROM), magnetic storage, flash memory, magnetic disks, or optical disks. The display component can be an electroluminescent (EL) element, a liquid crystal display (LCD), a micro-display with a similar structure, or a retinal display or similar laser scanning display.

The display component can be an electroluminescent (EL) element, a liquid crystal display (LCD), a micro-display with a similar structure, or a retinal display or similar laser scanning display.

It should be noted that in the case where the above computing device implements the video generation methods shown in FIG. 2, FIG. 3, or FIG. 5, it can be a physical device or an elastic computing host provided by a cloud computing platform. It can be implemented as a distributed cluster composed of a plurality of servers or terminal devices, or as a single server or a single terminal device. When the above computing device implements the information display method shown in FIG. 6, it can specifically be implemented as an electronic device. An electronic device refers to a device used by the user that has functions such as computing, internet access, communication, and others. Examples include smartphones, tablets, personal computers, wearable devices, and so on.

The embodiments of this application also provide a computer-readable storage medium, which stores a computer program. When executed by a computer, this computer program can implement the video generation methods shown in FIG. 2, FIG. 3, or FIG. 5, or the information display method shown in FIG. 6. This computer-readable medium can be included in the electronic devices described in the above embodiments, or it can exist separately, without being integrated into the electronic device.

The embodiments of this application also provide a computer program product, which includes a computer program stored on a computer-readable storage medium. When executed by a computer, this computer program can implement the video generation methods shown in FIG. 2, FIG. 3, or FIG. 5, or the information display method shown in FIG. 6.

In such embodiments, the computer program can be downloaded and installed from the network and/or installed from a removable medium. When the computer program is executed by the processor, it performs various functions defined in the system of this application.

The processing component mentioned in the corresponding embodiments above may include one or more processors to execute computer instructions and complete all or part of the steps in the methods described. Of course, the processing component can also be implemented using one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to execute the methods described above.

The storage component is configured to store various types of data to support operations on the terminal. The storage component can be implemented using any type of volatile or non-volatile storage device, or a combination of them, such as static random-access memory (SRAM), electrically erasable programmable read-only memory (EEPROM), erasable programmable read-only memory (EPROM), programmable read-only memory (PROM), read-only memory (ROM), magnetic storage, flash memory, magnetic disks, or optical disks.

The display component can be an electroluminescent (EL) element, a liquid crystal display (LCD), a micro-display with a similar structure, or a retinal display or a similar laser scanning display.

A computer-readable storage medium can be, but is not limited to, systems, devices, or components using electrical, magnetic, optical, electromagnetic, infrared, or semiconductor technology, or any combination of the above. More specific examples of computer-readable storage media include, but are not limited to: electrical connections with one or more conductors, portable computer disks, hard drives, random-access memory (RAM), read-only memory (ROM), erasable programmable read-only memory (EPROM), flash memory, optical fibers, portable compact disc read-only memory (CD-ROM), optical storage devices, magnetic storage devices, or any suitable combination of the above. In this application, a computer-readable storage medium can be any tangible medium that contains or stores a program that can be used or combined with an instruction-executing system, device, or component.

Those skilled in the art will clearly understand that, for the sake of convenience and simplicity in description, the specific operations of the systems, devices, and units described above can be referred to in the corresponding processes of the aforementioned method embodiments, and will not be repeated here.

The device embodiments described above are merely illustrative. The units described as separate components may or may not be physically separated. The components displayed as units may or may not be physical units, meaning they could be located in one place or distributed across a plurality of network units. Depending on actual needs, some or all of the modules can be selected to achieve the objectives of the embodiment. Those skilled in the art can understand and implement this without the need for creative labor.

Finally, it should be noted that the above embodiments are only intended to illustrate the technical solutions of this application and are not meant to limit them. Although the application has been described in detail with reference to the aforementioned embodiments, those skilled in the art should understand that modifications can be made to the technical solutions described in the embodiments, or some technical features can be equivalently replaced. These modifications or replacements do not depart from the spirit and scope of the technical solutions of the embodiments of this application.

## Claims

1. A video generation method, comprising:
acquiring at least one original image containing a target object;
constructing a three-dimensional (3D) model corresponding to each of the at least one original image;
transforming at least one of the 3D model into a plurality of target images using a plurality of transformation parameters;
determining material information matching the target object; and
generating a target video based on the plurality of target images and the material information.

2. The method of claim 1, wherein generating the target video based on the plurality of target images and the material information comprises:
compositing the material information with the plurality of target images; and
generating the target video based on a composited plurality of target images.

3. The method of claim 2, wherein the material information includes at least one material image, and wherein compositing the material information with the plurality of target images comprises:
determining the correspondence between the at least one material image and at least one target image; and
compositing each material image into its corresponding target image.

4. The method of claim 2, wherein the material information includes textual information, and wherein compositing the material information with the plurality of target images comprises:
compositing the textual information into at least one of the plurality of target images.

5. The method of claim 3, wherein determining the material information matching the target object comprises:
determining at least one material image based on an object category to which the target object belongs.

6. The method of claim 4, wherein determining the material information matching the target object comprises:
generating textual information for the target object based on object-related information of the target object;
wherein the object-related information includes one or more of object description information, object evaluation information, object category information, and object images.

7. The method of claim 1, wherein transforming at least one of the 3D model into a plurality of target images using a plurality of transformation parameters comprises:
determining a plurality of transformation parameters corresponding to at least one camera motion effect; and
transforming at least one of the 3D model into a plurality of target images using the plurality of transformation parameters.

8. The method of claim 1, further comprising:
determining a plurality of layers contained in the original image;
identifying a boundary region where one layer overlaps with another layer among adjacent layers;
designating the boundary region of the original image as the corresponding boundary region for each of the plurality of target images; and
filling the boundary region in any target image with a target color.

9. A video generation method, comprising:
acquiring a product image of a target product;
constructing a three-dimensional (3D) model corresponding to the product image;
transforming the 3D model into a plurality of target images using a plurality of transformation parameters;
determining material information matching the target product; and
generating a target video based on the material information and the plurality of target images.

10. The method of claim 9, wherein acquiring the product image of the target product comprises:
receiving a user's image processing request, wherein the image processing request includes the product image; or
receiving a user's image processing request, determining index information corresponding to the target product included in the image processing request, and identifying the product image, in which the target product serves as the image subject, from a product detail page of the target product based on the index information.

11. The method of claim 9, wherein generating the target video comprises:
receiving a user's publish request and updating a product detail page using the target video;
or
establishing a link between the target video and the product detail page, and publishing the target video to a product promotion page, such that when a trigger operation on the target video is detected on the product promotion page, redirecting to the product detail page based on the link.

12. An information display method, comprising:
providing a display interface;
displaying image processing prompt information on the display interface;
in response to an image processing operation triggered by the image processing prompt information, sending an image processing request to a server, wherein the image processing request is configured to cause the server to:
determine at least one original image containing a target object,
construct a three-dimensional (3D) model corresponding to each of the at least one original image,
transform at least one of the 3D model into a plurality of target images using a plurality of transformation parameters,
determine material information matching the target object, and
generate a target video based on the plurality of target images and the material information; and
playing the target video on the display interface.

13. A computing device, comprising: a processing component and a storage component configured to store one or more computer instructions, wherein the one or more computer instructions are executable by the processing component to implement: a video generation method according to any one of claims 1 to 8; the video generation method according to any one of claims 9 to 11; or the information display method according to claim 12.

14. A computer-readable storage medium storing a computer program, wherein the computer program , when executed by a computer, performs the video generation method according to any one of claims 1 to 8; the video generation method according to any one of claims 9 to **11;** or the information display method according to claim 12.
